# EUROPÄISCHE PATENTSCHRIFT

(11) **EP 2 138 388 B1**
(45) Veröffentlichungstag und Bekanntmachung des Hinweises auf die Patenterteilung: **21.11.2012**
(21) Anmeldenummer: 09172927.7
(22) Anmeldetag: 03.02.2006
(51) Int. Cl.: B62D 65/02, B62D 65/18, B23P 21/00, B23K 37/047

(54) **Fertigungsverfahren und Fertigungseinrichtung für Karosseriebauteile**
Production method and device for vehicle body parts
Procédé de fabrication et dispositif de fabrication pour des pièces de carosserie

(30) Priorität: 03.02.2005 DE 202005001780 U
(43) Veröffentlichungstag der Anmeldung: 30.12.2009
(62) Teilanmeldung aus: 06706606.8
(73) Patentinhaber: KUKA Systems GmbH, 86165 Augsburg (DE)
(72) Erfinder: Hesse, Johann, 86152, Augsburg (DE); Kollmar, Thomas, 74223, Flein (DE); Emerich, Bruno, 86163, Augsburg (DE); Heck, Roland, 86150, Augsburg (DE); Geistdörfer, Paul, 86179, Augsburg (DE); Ziegler, Thomas, 86462, Langweid am Lech (DE)
(74) Vertreter: Ernicke, Hans-Dieter

(56) Entgegenhaltungen:
- EP-A- 0 579 160
- EP-A- 1 293 419
- DE-A1- 3 542 373
- DE-A1- 19 505 622
- FR-A- 2 728 186

## Beschreibung

Die Erfindung betrifft ein Fertigungsverfahren und eine Fertigungseinreichtung für Bauteile von Karosserien, mit den Merkmalen im Oberbegriff des Verfahrens- und Vorrichtungshauptanspruchs.

Eine gattungsgemägige Fertigungseinrichtung für Fahrzeugkarosserien ist aus der EP 0 579 160 A1 bekannt. Die Fertigungseinrichtung ist als kombinierte Rüststation und Heft- bzw. Schweißstation ausgebildet, in der einer Bodengruppe Karosserie-Seitenteile sowie Dachteile zugeführt, mittels beidseitiger Spannrahmen in einer vorgegebenen Position gespannt und von Schweißrobotern geheftet und ggf. ausgeschweißt werden. Die unterschiedlich ausgebildeten Spannrahmen sind von liegend angeordneten Trommelmagazinen in Aufnahmen am Trommelmantel gehalten und werden mit Karosserie-Seitenteilen beladen. Mittels einer Transportvorrichtung können sie von ihrem Trommelmagazin zu einem Schlitten mit einer Rahmenaufnahme und von diesem weiter zu einer Arbeitsstelle an der Bodengruppe transportiert werden. Sie können auch zu einem anderen Trommelmagazin transportiert werden.

Die FR 2 728 186 A zeigt eine Fertigungseinrichtung für Karosseriebauteile mit einer als Drehkreuz ausgebildeten Transporteinrichtung, welche vier um eine vertikale Achse drehbare Arme mit Schienenführungen aufweist. Im Kreis rund um das Drehkreuz sind mit radialer Ausrichtung stationäre Schienenstücke angeordnet, die als Magazine zur Aufnahme von Paletten für zwei verschiedene Karosserien dienen. Die anderen stationären Schienenstücke befinden sich an einer Ladestation und einer Bearbeitungsstation, die beide außerhalb des Drehkreuzes angeordnet sind. An der Ladestation wird eine auf dem stationären Schienenstück befindliche Palette mit Karosseriebauteilen beladen und über das Drehkreuz zu der Bearbeitungsstation und deren stationärem Schienenstück transportiert. Die Paletten befinden sich zeitweise und nur für die Dauer des Transports auf dem Drehkreuz.

Die DE 35 42 373 A1 befasst sich ebenfalls mit einem mehrarmigen Drehkreuz für den Transport von palettenartigen Werkstückträgern zu peripher angeordneten stationären Palettenaufnahmen mit Bearbeitungsrobotern oder einem Palettenmagazin. Das Drehkreuz hat auch eine reine Transportfunktion.

Eine andere Fertigungseinrichtung ist aus der DE 203 04 022 U1 bekannt. Sie besteht aus mehreren Ladestationen, die jeweils mit einem Werkzeug zur Aufnahme der Bauteile ausgerüstet sind. Benachbart zur Ladestation sind mehrere Bearbeitungsstationen, insbesondere Schweißstationen, mit mehreren Bearbeitungseinrichtungen zum Bearbeiten, insbesondere Schweißen der Bauteile angeordnet. Bei dieser Fertigungseinrichtung werden die Bauteile z.T. bereits in der Ladestation bearbeitet und geschweißt. Ferner werden die Bauteile zwischen den Stationen mittels verfahrbarer Roboter transportiert.

Es ist Aufgabe der vorliegenden Erfindung, eine weiterentwickelte und verbesserte Fertigungstechnik aufzuzeigen.

Die Erfindung löst diese Aufgabe mit den Merkmalen im Verfahrens- und Vorrichtungshauptanspruch.

Die beanspruchte Fertigungstechnik hat den Vorteil, dass sie eine maximale Flexibilität bei einem minimalen Bau- und Platzaufwand bietet. Sie gibt dem Betreiber die Möglichkeit, eine grundsätzlich beliebig große Zahl unterschiedlicher Bauteilarten oder Bauteiltypen im freien Mix zu fahren. Hierbei ergeben sich auch prozesstechnische Vorteile. Günstig ist ferner die mit der Fertigungseinrichtung erzielbare kurze Taktzeit.

Insbesondere kann ein Werkzeug- bzw. Bauteilwechsel noch während des Bearbeitungsprozesses in der Bearbeitungsstation stattfinden. Während der Restdauer des Bearbeitungsprozesses kann das zurückgeführte Werkzeug erneut mit einem Bauteil beladen und für den nächsten Bearbeitungsprozess bereit gestellt werden. Diese Überschneidung von Bearbeitungs- und Rüstzeiten inklusive Transportzeiten für die Abgabe der bearbeiteten Werkstücke bzw. Bauteile bringt eine optimale Zeitausnutzung und erlaubt besonders kurze Taktzeiten.

Technisch und kinematisch günstig wirkt sich der Einsatz eines Drehtisches als Ladestation für mehrere Werkzeuge aus. Dieser kann mit mindestens einer rotierenden Tragfläche ausgerüstet sein. Alternativ kann die Ladestation als Umlaufförderer ausgebildet sein. Auf der Ladestation, insbesondere dem Drehtisch, sind die Werkzeuge und ihre Führungen vorzugsweise in der gleichen Ebene angeordnet. Der Werkzeugwechsel lässt sich schnell, einfach und positionsgenau durch eine einfache und leicht steuerbare Tischdrehung vollziehen. Das Werkzeugmagazin auf dem Drehtisch kann mit ein oder mehreren angeschlossenen zusätzlichen Werkzeugmagazinen in der Kapazität beliebig erweitert werden. Die Zusatzmagazine können dank unterschiedlicher Ausschleusmöglichkeiten in Anpassung an die örtlich gegebene Raumsituation beliebig angeordnet werden.

Die beanspruchte Fertigungseinrichtung ist für beliebige Werkstücke oder Bauteile und beliebige Bearbeitungsprozesse geeignet. Besondere Vorteile bestehen bei Fügeprozessen, insbesondere Schweißprozessen und speziell beim Geometrieschweißen von zunächst losen Komponenten der Bauteile, z.B. Karosseriebauteile. Die beanspruchte Fertigungseinrichtung lässt sich in größere Fertigungsanlagen eingliedern, wobei sie mit anderen Anlagenteilen oder ggf. auch weiteren Fertigungseinsrichtungen verkettet werden kann.

Die Bearbeitungsstation zur Bearbeitung der Werkstücke ist mit dem Drehtisch verbunden. Hierfür gibt es verschiedene Ausgestaltungsmöglichkeiten. In der einen beanspruchten Variante wird die Bearbeitungsstation auf dem Drehtisch gebildet. Dies bringt einen sehr geringen Bauaufwand und eine entsprechende Kostenersparnis mit sich. In der anderen Variante ist die Bearbeitungsstation getrennt vom Drehtisch angeordnet und mit diesem über einen Werkzeugförderer verbunden. In dieser Variante steht mehr Platz für Bearbeitungsvorrichtungen, insbesondere Roboter oder dergl., zur Verfügung.

Der für die Magazinierung und den Transport der Werkzeuge erforderliche Bauaufwand kann minimal gehalten werden. Der Drehtisch und ggf. der Werkzeugförderer sind technisch einfache und kostengünstige Baueinheiten, die sich zudem einfach und genau steuern lassen. Ein flurgebundener Werkzeugförderer hat den Vorteil, dass der Raum oberhalb der Werkzeuge frei bleibt und für Lade- und Bearbeitungsvorgänge frei zugänglich ist.

Die Werkzeugbelegung auf dem Drehtisch kann veränderlich sein. Das Werkzeugmagazin lässt sich dadurch in der Kapazität anpassen und bei Bedarf ohne großen Zusatzaufwand umrüsten. Wenn die Typenvielfalt steigt, kann die Fertigungseinrichtung kostengünstig und mit wenig Aufwand angepasst werden.

Besonders vorteilhaft ist der Umstand, dass die Aufnahmestellen der Ladestation mit einer maximalen Werkzeug- und Typenvielfalt bestückt und für die Flexibilität optimal ausgenutzt werden können. Insbesondere können alle Aufnahmestellen unterschiedliche Werkzeuge tragen, so dass jeder Werkzeugtyp nur einmal vorhanden zu sein braucht. Wenn die Fertigungskapazität erhöht werden soll und mehrere Bearbeitungsstationen mit einer Ladestation verbunden sind, können trotzdem alle Werkzeugtypen nur einmal vorhanden sein. Auf Mehrfachanordnungen von Werkzeugtypen kann dank der Überschneidung von Bearbeitungs- und Rüstzeiten verzichtet werden. Bei Bedarf können solche Mehrfachanordnungen vorgesehen sein, insbesondere, wenn mehrere Bearbeitungsstationen an einer Ladestation gleiche Werkstücke bzw. Bauteiltypen bearbeiten und die vorgenannte Überschneidung von Bearbeitungs- und Rüstzeiten nicht ausreicht oder die stationsweise gegenseitige Abstimmung dieser Zeiten schwierig ist.

Die Kombination von Ladestation und Werkzeugmagazin in einer gemeinsamen Einrichtung mit einem Drehtisch spart erheblich Platz, vereinfacht die Wechselvorgänge und verringert den Bauaufwand. Insbesondere kommt die beanspruchte Fertigungseinrichtung mit vergleichsweise wenigen hochwertigen Robotern aus und kann diese außerdem in hohem Maß auslasten.

In den Unteransprüchen sind weitere vorteilhafte Ausgestaltungen der Erfindung angegeben.

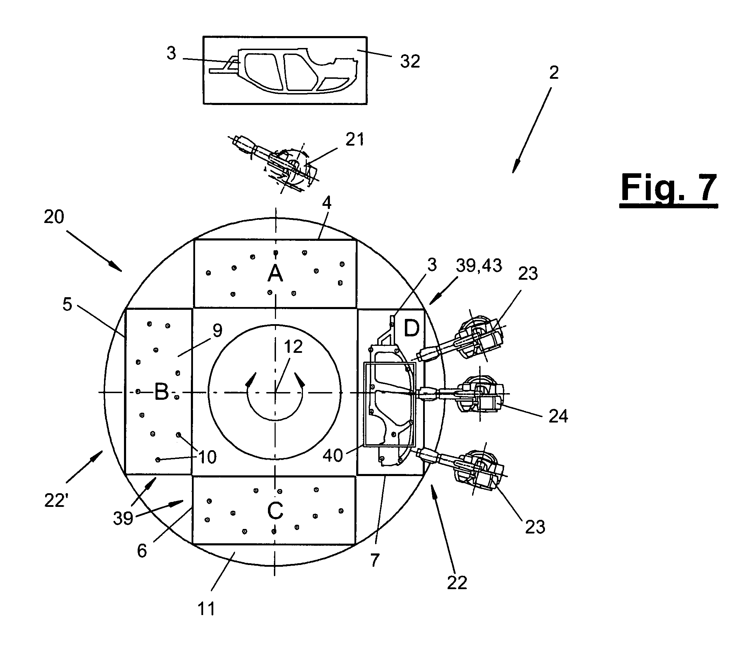

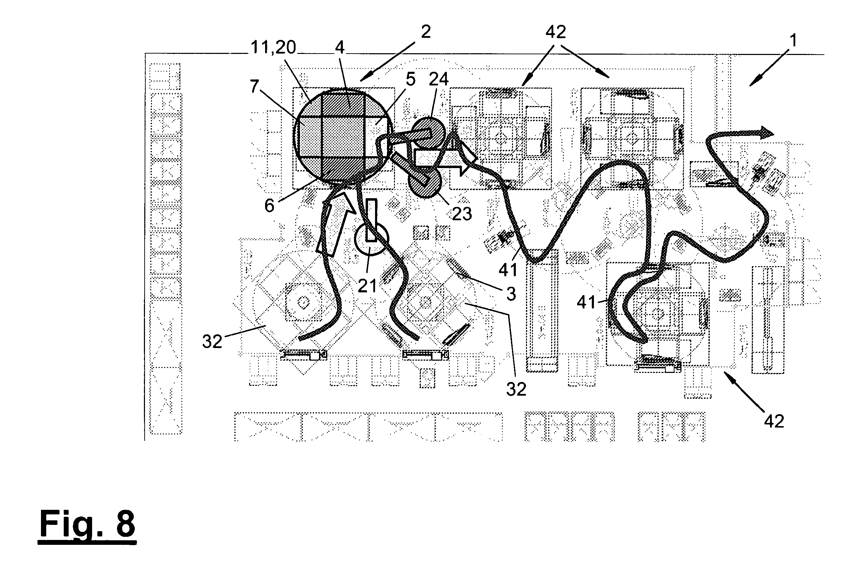

Die Erfindung ist in den Zeichnungen von Figur 7 und 8 beispielsweise und schematisch dargestellt. Im einzelnen zeigen:
- Figur 1:: einen Ausschnitt einer Fertigungsanlage mit einer Fertigungseinrichtung mit kombinierter Ladestation und Werkzeugmagazinen sowie einer Bearbeitungsstation,
- Figur 2:: eine Variante der Fertigungseinrichtung mit einem zusätzlichen Werkzeugmagazin,
- Figur 3:: eine weitere Variante der Fertigungseinrichtung mit einer anderen Belegung des Werkzeugmagazins,
- Figur 4:: eine schematische Seitenansicht einer Fertigungseinrichtung,
- Figur 5:: eine schematische perspektivische Ansicht einer Fertigungseinrichtung,
- Figur 6:: eine Variante der Fertigungseinrichtung mit einer zusätzlichen Bearbeitungsstation,
- Figur 7:: eine erfindungsgemäße Fertigungseinrichtung mit einer auf dem Drehtisch angeordneten Bearbeitungsstation und
- Figur 8:: eine erfindungsgemäße Fertigungsanlage mit einer Fertigungseinrichtung gemäß Figur 7 und einer Verkettung mit weiteren Fertigungseinrichtungen.

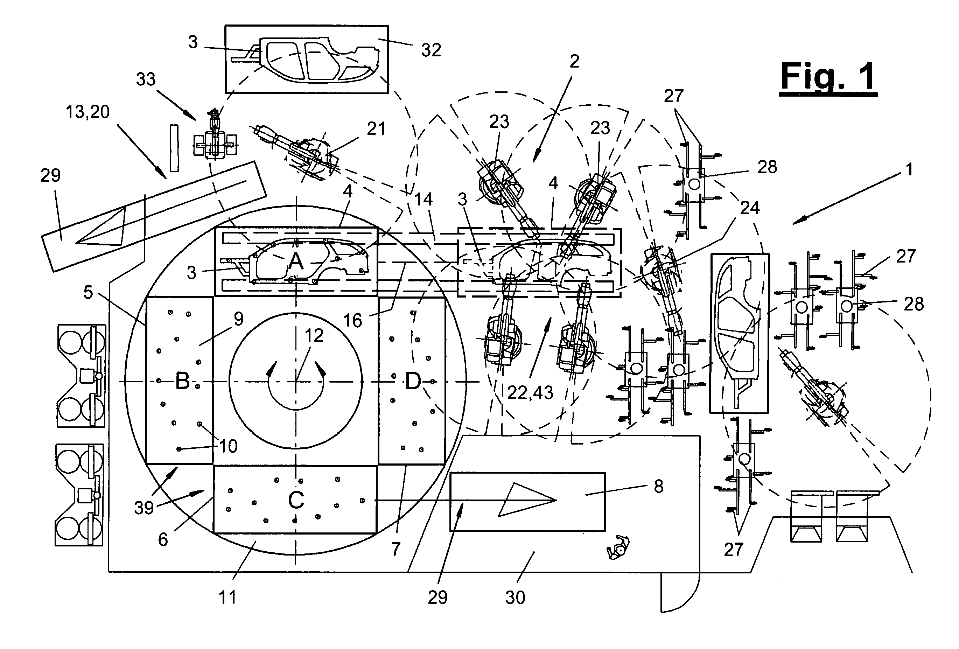

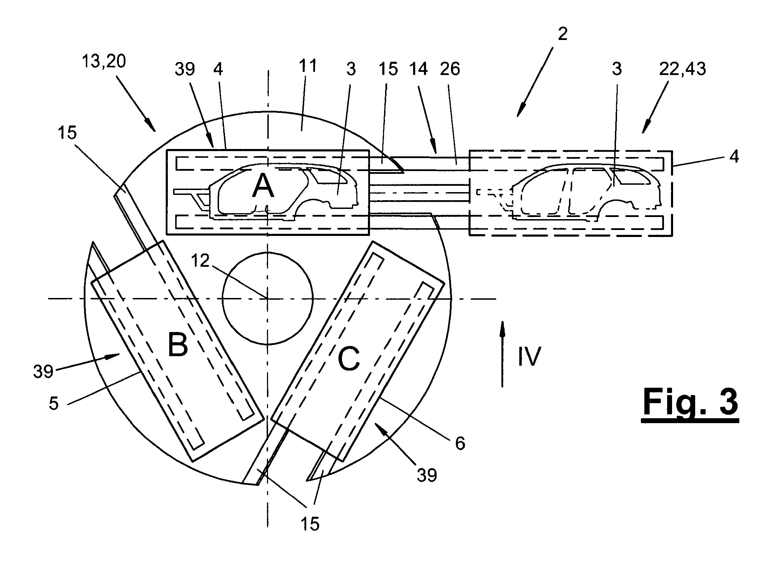

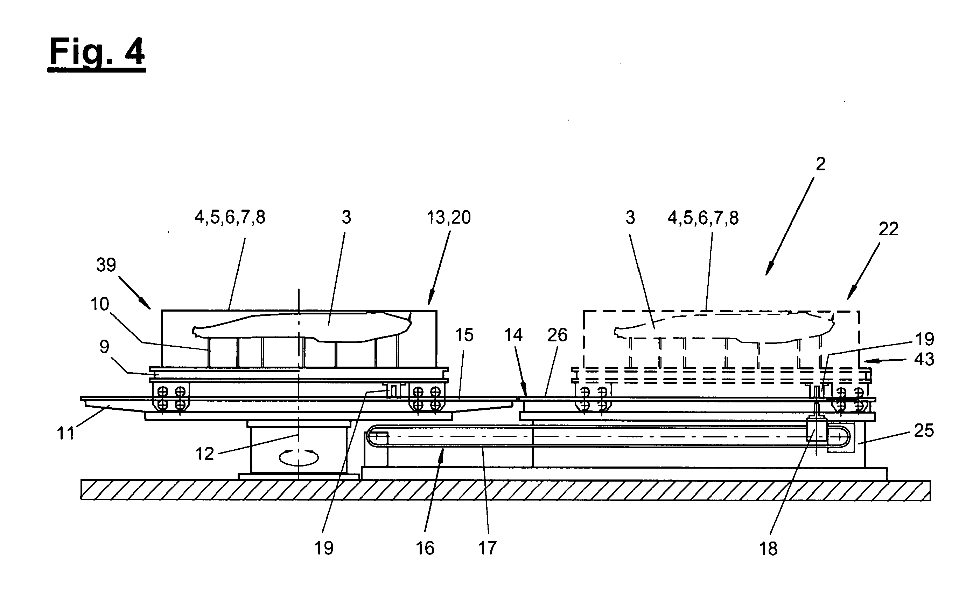

Figur 1 bis 3 und 5 bis 7 zeigen in schematischen Draufsichten eine Fertigungseinrichtung (2) für Bauteile (3) in mehreren Varianten. Figur 4 zeigt hierzu eine schematische Seitenansicht gemäß Pfeil IV von Figur 3.

Die Fertigungseinrichtung (2) kann Bestandteil einer umfangreicheren Fertigungsanlage (1) sein und in dieser Anlage (1) mit anderen Anlagenteilen (42) verknüpft oder verkettet sein. Figur 8 zeigt bespielhaft eine solche Verkettung (41). Die Fertigungseinrichtung (2) kann innerhalb der Fertigungsanlage (1) auch mehrfach und in unterschiedlichen Ausgestaltungen vorhanden sein, wobei zwischen den Fertigungseinrichtungen (2) eine mittelbare oder unmittelbare Verkettung (41) bestehen kann.

Die Bauteile (3) oder generell Werkstücke können von beliebiger Art sein. Vorzugsweise handelt es sich im Karosseriebauteile von Fahrzeugrohkarosserien. Dies können z.B. Seitenwände, Dachteile, Bodengruppen oder dergl. sein. Die Bauteile (3) bestehen z.B. aus mehreren zunächst losen Bauteilkomponenten, die in der Fertigungseinrichtung (2) zusammengestellt und miteinander gefügt werden. Die Fügeprozesse können von beliebiger Art sein, z.B. Schweißen, Kleben, Nieten oder dergl.. Die in der Fertigungseinrichtung (2) vorgenommenen Bauteilbearbeitungen können alternativ oder zusätzlich zu den Fügeprozessen andere Bearbeitungsprozesse beinhalten, z.B. Umformprozesse, Wärmebehandlung oder dergl..

Die Erfindung betrifft ein Fertigungsverfahren und die in den Fig. 7 dargestellte Fertigungseinrichtung (2), wobei verschiedene Varianten den Unteransprüchen entsprechend möglich sind. Darüber hinaus betrifft die Erfindung auch eine mit ein oder mehreren solcher Fertigungseinrichtungen (2) ausgerüstete Fertigungsanlage (1), die z.B. in Figur 8 ausschnittsweise dargestellt ist.

Die Fertigungseinrichtung (2) besteht aus mindestens einer Ladestation (20) mit mindestens einem Werkzeug (4,5,6,7,8) zur Aufnahme der Bauteile (3) und mindestens einer mit der Ladestation (20) verbundenen Bearbeitungsstation (22,22'), die mit ein oder mehreren Bearbeitungseinrichtungen (23) zur Bearbeitung der Bauteile (3) ausgerüstet ist.

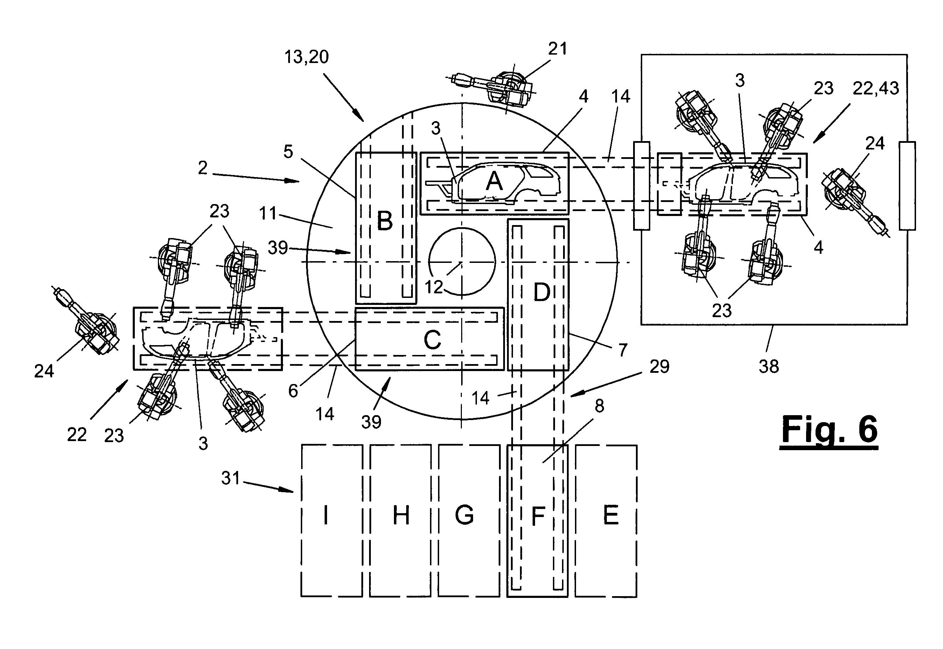

Die Bearbeitungsstation(en) (22,22') können auf oder an der Ladestation (20) angeordnet sein. Die Bearbeitungsstelle (43) für das Bauteil (3) befindet sich dabei auf der Ladestation (20). Figur 7 und 8 zeigen eine solche Variante. Die Bearbeitungsstation(en) (22,22') und die Bearbeitungsstelle(n) (43) können auch separat und benachbart neben der Ladestation (20) angeordnet sein, wie dies Figur 1 bis 6, die nicht unten Anspruch 1 follen verdeutlichen. In den Varianten von Figur 1 bis 5 und 7 ist eine einzelne Bearbeitungsstation (22) vorhanden. In der Variante von Figur 6 sind zwei Bearbeitungsstationen (22,22') gezeigt, die an gegenüber liegenden Seiten der Ladestation (20) oder an anderer geeigneter Stelle angeordnet sind. Eine solche Gestaltung ist auch bei der erfindungsgemäβen Variante von Figur 7 möglich.

Die Ladestation (20) kann unterschiedlich ausgebildet sein. Sie ist zugleich als Werkzeugmagazin (13) ausgebildet. Die Ladestation (20) weist z.B. einen flurgebundenen und vorzugsweise stationären Drehtisch (11) mit einer z.B. vertikalen, ggf. stationären Drehtischachse (12) auf. Auf dem Drehtisch (11) sind mehrere Werkzeuge (4,5,6,7) an mehreren Aufnahmestellen (39) beweglich gelagert. Die Werkzeuge (4,5,6,7) können zwischen dem Drehtisch (11) und der separaten Bearbeitungsstation (22,22') gemäß Figur 1 bis 6 mittels eines steuerbaren Werkzeugförderers (16) hin und her bewegt werden.

In einer nicht dargestellten Variante kann die Ladestation (20) als kreis- oder ringförmiger Umlaufförderer ausgebildet sein, auf dem die Werkzeuge (4,5,6,7) in einer endlosen Bahn gefördert werden, wobei die Förderbewegungung kontinuierlich in einer Richtung oder reversierend erfolgt. Auch der Drehtisch kann eine solche Kinematik haben.

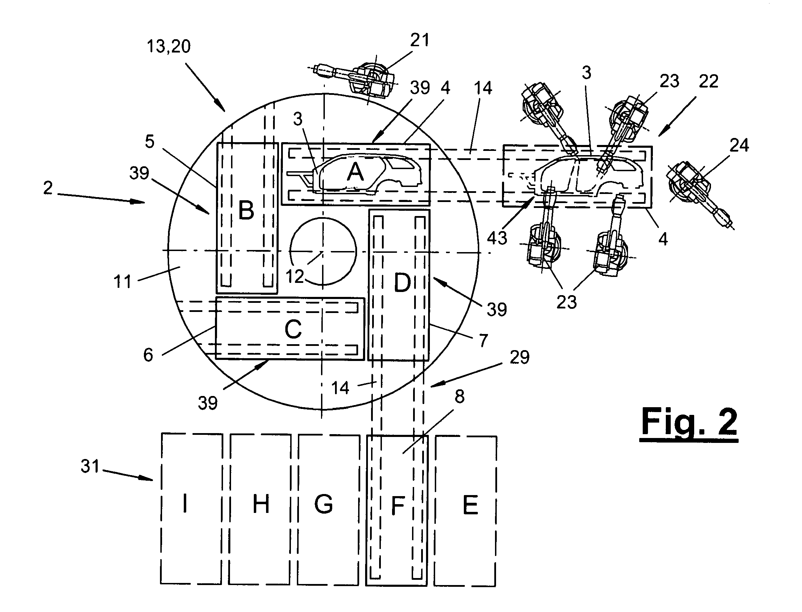

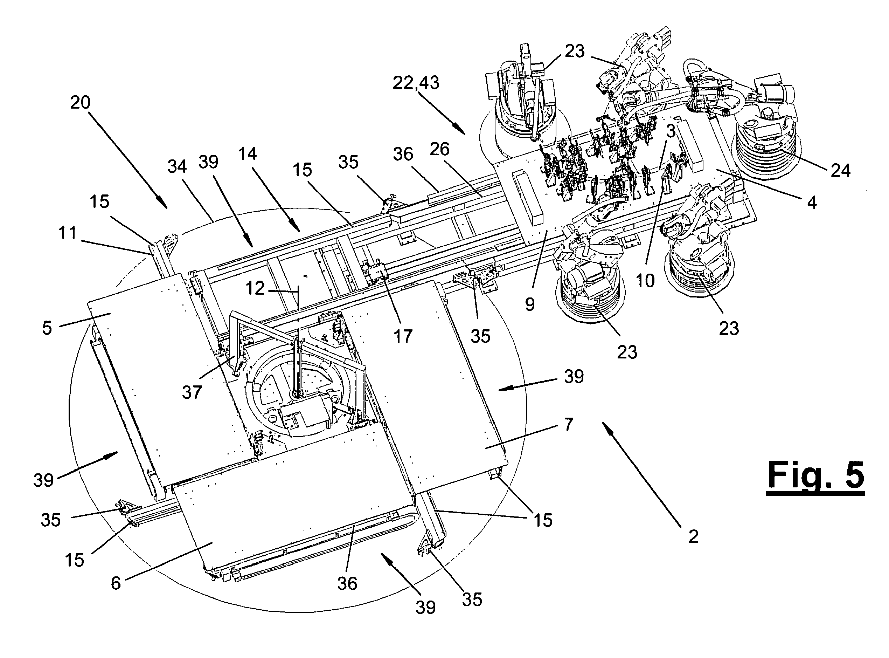

Die Werkzeuge (4,5,6,7) sind unterschiedlich ausgebildet und sind für unterschiedliche Bauteilarten oder Bauteiltypen A - I vorgesehen und an diese angepasst. Auf der Ladestation (20), insbesondere dem Drehtisch (11) sind die unterschiedlichen Werkzeuge (4,5,6,7) im Kreis um die Drehtischachse (12) gleichmäßig verteilt angeordnet. Sie nehmen z.B. eine liegende Position ein und befinden sich in der gleichen Ebene auf dem Drehtisch (11). Jede Aufnahmestelle (39) nimmt dabei ein Werkzeug (4,5,6,7) auf. Im Ausführungsbeispiel von Figur 1, 2 und 7 beherbergt der Drehtisch (11) vier Werkzeuge (4,5,6,7) an vier Aufnahmestellen (39). In der Varianten von Figur 3 sind drei Werkzeuge (4,5,6) und Aufnahmestellen (39) vorhanden. In der Ausführungsform von Figur 1 und 7 sind die vier Werkzeuge (4,5,6,7) über Eck angeordnet. Figur 2 und 5 zeigen eine Variante mit einer verschachtelten und teilweise überlappten Werkzeuganordnung. Hierbei grenzen die Werkzeuge (4,5,6,7) jeweils mit einer Stirnseite an eine Breitseite des benachbarten Werkzeugs (4,5,6,7).

Wie Figur 1, 4 und 5 verdeutlichen, bestehen die Werkzeuge (4,5,6,7,8) jeweils aus einem Werkzeugträger (9) und einer darauf angeordneten Spanneinrichtung (10) zur Aufnahme der Bauteile (3) und ihrer Komponenten. Die Werkzeugträger sind vorzugsweise untereinander gleich und z.B. als Platten oder Paletten ausgebildet. Die Spanneinrichtungen (10) sind an die unterschiedlichen Bauteiltypen A-I angepasst und entsprechend unterschiedlich ausgebildet.

Die Spanneinrichtungen (10) können eine Vielzahl von Spannern aufweisen, die angetrieben und einzeln fernsteuerbar sind. Die Spanner können gem. Figur 4 und 5 auf Ständern angeordnet sein und das Bauteil (3) vom Werkzeugträger (9) abheben und distanzieren. Die Spanneinrichtung (10) kann ferner Anschläge, Indexe oder andere Positioniereinrichtungen besitzen. Sie kann auch andere, nicht dargestellte Werkzeugteile aufweisen. Auf die Spanneinrichtung (10) werden beim Beladevorgang die Bauteile (3) manuell von einem Werker oder automatisch mittels ein oder mehrerer Ladeeinrichtungen (21) eingelegt, positioniert und gespannt. Wenn ein Bauteil (3) aus mehreren losen Bauteilkomponenten besteht, werden diese Komponenten in ihrer vorgesehenen Relativlage zueinander einzeln oder im Satz ins Werkzeug (4,5,6,7) eingelegt und gespannt.

Beim Beladevorgang kann ein Zwischenschritt eingefügt werden, wobei z.B. die Bauteile (3) oder einzelne ihrer Komponenten vor dem Beladen der Werkzeuge (4,5,6,7,8) behandelt werden, indem sie z.B. mit einer Kleberaupe, einer Beschichtung oder dgl. versehen werden. Figur 1 zeigt hierzu schematisch eine solche Behandlungseinrichtung (33) im Arbeitsbereich der Ladeeinrichtung (21). Die Ladeeinrichtung (21) kann in beliebig geeigneter Weise ausgebildet sein. Vorzugsweise handelt es sich um einen mehrachsigen Industrieroboter, insbesondere um einen Gelenkarmroboter mit sechs oder mehr Achsen. Der Roboter (21) kann stationär angeordnet sein. Er kann alternativ ein oder mehrere zusätzliche Bewegungsachsen, insbesondere Fahrachsen haben.

Die Werkzeuge (4,5,6,7,8) sind in den Varianten von Figur 1 bis 6 mit der separaten, vorzugsweise stationären Bearbeitungsstation (22,22') auf dem Drehtisch (11) in der eingangs erwähnten Weise beweglich gelagert. Die bewegliche Lagerung kann in beliebig geeigneter Weise ausgeführt sein. In der gezeigten Ausführungsform ist an jeder Aufnahmestelle (39) für das zugehörige Werkzeug (4,5,6,7,8) eine Führung (14) vorgesehen. Hierbei handelt es sich z.B. um eine Schienenführung, auf welcher der Werkzeugträger (9) längsbeweglich gelagert und geführt ist. Dies kann eine Gleitführung, eine Rollführung oder dergl. sein. Der Werkzeugträger (9) kann hierfür an der Unterseite entsprechende Laufwerke aufweisen, wie sie in Figur 4 schematisch dargestellt sind. Die Führung (14) ist vorzugsweise gerade ausgebildet. Sie ist außerdem geteilt und gliedert sich in mehrere Führungsabschnitte (15) an den Aufnahmestellen (39) auf der Oberseite des Drehtisches (11) und einen Führungsabschnitt (26) an der Bearbeitungsstelle (43) der Bearbeitungsstation (22,22'), der auf einem Stationsgestell (25) vorzugsweise ortfest gelagert und abgestützt ist. Die Führungs- oder Schienenabschnitte (15,26) liegen z.B. alle auf der gleichen Höhe bzw. in der gleichen Ebene senkrecht zur Drehtischachse (12).

Die Aufnahmestellen (39) und die Führungs- oder Schienenabschnitte (15) auf dem Drehtisch (11) sind z.B. in der gleichen Ebene und gleichmäßig im Kreis verteilt angeordnet und sind z.B. tangential zur Drehachse (12) bzw. zur Kreiskontur ausgerichtet. Sie bilden dabei Sekanten des z.B. kreisrunden Drehtisches (11). Der Drehtisch (11) hat eine z.B. im wesentlichen ebene und quer zur Drehachse (12) ausgerichtete Tischoberfläche oder Tischebene. Er kann z.B. eine im wesentlichen kreisförmige, ein- oder mehrteilige und vorzugsweise ebene Tischplatte mit darauf angeordneten Schienenabschnitten (15) aufweisen, wie dies in Figur 1 und 2 angedeutet ist. Alternativ kann der Drehtisch (11) ein rahmen- oder gerüstartiges Tischgestell (37) aufweisen, welches die Tragkonstruktion für die Führungs- oder Schienenabschnitte (15) und zusammen mit diesen die Tischebene bildet. Diese Ausführung mit ihrer bei der Tischdrehung sich ergebenden Störkontur (34) ist in Figur 5 dargestellt.

Die Einzelschienen der Schienenabschnitte (15) sind ggf. zueinander längsversetzt und unterschiedlich lang. Sie enden gemeinsam am Tischrand oder an der Störkontur (34) und haben dort entsprechend der Konturenrundung abgeschrägte oder abgerundete Enden. Die stationären Führungs- oder Schienenabschnitte (26) können ebenfalls entsprechend angepasste Enden haben.

Auf jedem Führungsabschnitt oder Schienenabschnitt (15) ist ein Werkzeug (4,5,6,7) längsverfahrbar angeordnet. Durch eine Drehung des Drehtisches (11) werden die Führungs- oder Schienenabschnitte (15,26) zur Deckung gebracht, so dass der Werkzeugförderer (16) das Werkzeug (4,5,6,7) vom Drehtisch (11) auf die Bearbeitungsstation (22,22') und wieder zurück verschieben kann.

An den Verbindungsstellen der Führungs- oder Schienenabschnitte (15,26) können steuerbare und ausfahrbare Absteckungen (35) angeordnet sein, welche die unter der Belastung evtl. elastisch verformten und abgesenkten Enden der Führungs- oder Schienenabschnitte (15,26) in eine gemeinsame Fluchtlinie für eine durchgehende störungsfreie Führung (14) bringen.

Wie Figur 4 verdeutlicht, ist der Werkzeugförderer (16) z.B. flurgebunden und unterhalb des Drehtisches (11) und der Führung (14) angeordnet. Der Werkzeugförderer (16) kann in beliebig geeigneter Weise ausgebildet sein. Er kann wahlweise der Bearbeitungsstation (22,22') zugeordnet oder am Drehtisch (11) angeordnet und entsprechend mehrfach vorhanden sein. Im gezeigten Ausführungsbeispiel besteht er aus einem umlaufenden Schleppförderer (17), der z.B. als Zahnriementrieb ausgebildet ist. Der Schleppförderer (17) besitzt z.B. mindestens einen beweglichen Mitnehmer (18), der mit entsprechenden Aufnehmern (19) an der Unterseite der Werkzeuge (4,5,6,7,8) bzw. der Werkzeugträger (9) in Eingriff tritt. Der Mitnehmer (18) hat hierfür z.B. einen angetriebenen und ferngesteuert ausfahrbaren Schleppzapfen, der von unten formschlüssig in eine Bohrung am Aufnehmer (19) eingreifen kann. Am Drehtisch (11) und am Stationsgestell (25) können entsprechende Ausnehmungen vorhanden sein, die einen Durchtritt des Mitnehmers (18) und des Aufnehmers (19) erlauben.

In einer anderen, nicht dargestellten Ausführungsform des Schleppförderers (17) kann z.B. an der Unterseite des Werkzeugträgers (9) eine steuerbare Klemmeinrichtung angeordnet sein, die am umlaufend oder reversierend angetriebenen Fördermittel, z.B. dem besagten Zahnriemen oder dgl., an- und abklemmt. In dieser Variante ist der Schleppförderer (17) stationär im Bereich der Bearbeitungsstation (22,22') angeordnet. In einer weiteren, nicht dargestellten Variante kann der Werkzeugförderer (16) als teleskopierbarer Kettentrieb, als Spindeltrieb oder dgl. ausgebildet sein.

Außerdem kann eine geeignete Energiezuführung (36) für den Werkzeugträger (9) und für seine Spannvorrichtung (10) oder für andere Trägerteile vorhanden sein, die z.B. gemäß Figur 5 als dem Drehtisch (11) zugeordneter und mit dem Werkzeugträger (9) mitbewegter Kabelschlepp ausgebildet ist. In Variation hierzu kann die Energiezuführung (36) als steuerbare Multikupplung für die Betriebsmittelleitungen mit ausfahrbaren und steckbaren Kupplungsteilen am Drehtisch (11) und an der Bearbeitungsstation (22,22') ausgebildet sein.

Der Drehtisch (11) können außerdem an ein oder mehrere Servicestationen (30) für die Werkzeuge (4,5,6,7,8) angeschlossen sein. Für den Transport der Werkzeuge (4,5,6,7,8) zwischen dem Drehtisch (11) und der Servicestation (30) ist eine Ausschleusung (29) vorhanden, die für den Werkzeugtransport in gleicher oder ähnlicher Weise wie die Bearbeitungsstation (22,22') ausgebildet sein kann und einen Werkzeugförderer (16) der vorbeschriebenen Art aufweisen kann. Alternativ ist ein manueller Förderbetrieb, evtl. mit einem Seilzug oder dgl., möglich. In der Servicestation (30) können sich ein oder mehrere Führungs- oder Schienenabschnitte nebst Absteckungen (nicht dargestellt) befinden. Figur 1 zeigt eine solche Ausgestaltung.

Gemäß Figur 2 können an den Drehtischen (11) auch ein oder mehrere zusätzliche Werkzeugmagazine (31) über eine entsprechende Ausschleusung (29) angeschlossen sein. In diesem Zusatzmagazin (31) können mehrere weitere Werkzeuge (8) bevorratet sein. Wenn in der Fertigungsanlage (1) bzw. der Fertigungseinrichtung (2) mehr als drei oder vier verschiedene Bauteiltypen A - D gefahren werden, können bei Bedarf die auf dem Drehtisch (11) angeordneten Werkzeuge (4,5,6,7) entsprechend gewechselt und ausgetauscht werden. Die Zusatzmagazine (31) können ebenfalls als Drehmagazine oder wie z.B. in der gezeigten Ausführung als Verschiebemagazine ausgebildet sein. Grundsätzlich sind Zahl, Größe, Kinematik und Ausgestaltung der zusätzlichen Magazine (31) beliebig wählbar.

An der Bearbeitungsstation (22,22') sind in den gezeigten Ausführungsformen mehrere Bearbeitungseinrichtungen (23) mit geeigneten und ggf. wechselbaren Bearbeitungswerkzeugen angeordnet. Die Bearbeitungsstation (22,22') ist in den gezeigten Ausführungsformen z.B. als Geometrieschweißstation ausgebildet. Die Bearbeitungseinrichtungen (23) sind hierbei als mehrachsige Schweißroboter, insbesondere Gelenkarmroboter mit sechs oder mehr Achsen, ausgebildet. In der Geo-Schweißstation werden die losen Bauteilkomponenten miteinander gefügt. Alternativ können in der vorbeschriebenen Weise Klebeprozesse oder ggf. auch andere Bearbeitungsprozesse stattfinden.

Wie Figur 6 verdeutlicht, kann eine Bearbeitungsstation (22,22') auch mit einer Schutzkabine (38) umgeben sein, die z.B. als Laserkabine für einen Laserschweißprozess ausgebildet ist. Die Schutzkabine (38) kann für die Zu- und Abfuhr der Werkzeugträger (9) und ggf. der bearbeiteten Werkstücke (3) steuerbare Sicherheitsschleusen aufweisen.

An der Bearbeitungsstation (22,22') ist mindestens eine Handlingeinrichtung (24) vorgesehen, die zum Handhaben der Bauteile (3) und auch zum Lösen der Bauteile (3) vom Werkzeug (4,5,6,7,8) vorgesehen ist. Die Handlingeinrichtung (24) ist ebenfalls als mehrachsiger Industrieroboter, vorzugsweise Gelenkarmroboter mit sechs oder mehr Achsen, ausgebildet. Sie trägt ein Roboterwerkzeug (27), z.B. ein Greifwerkzeug (40), mit dem das Bauteil (3) nach dem ersten Fügevorgang und dem Verbinden der Bauteilkomponenten gegriffen, angehoben und vom Werkzeug (4,5,6,7,8) gelöst werden kann. Der Roboter (24) kann das Bauteil (3) schwebend halten, wobei die Roboter (23) ihre Bearbeitungsvorgänge fortsetzen.

Während dieser Zeit kann das freigegebene Werkzeug (4,5,6,7,8) von der Bearbeitungsstation (22,22') zurück auf den Drehtisch (11) befördert werden, wo es für eine neuerliche Beladung oder einen Werkzeugwechsel per Tischdrehung bereit steht. Auf diese Weise können die Bearbeitungs- und Rüstzeiten für die restlichen Bearbeitungsvorgänge in der Bearbeitungsstation (22,22') und die neuerliche Beladung und/oder der Werkzeugwechsel zeitlich überschnitten werden. Der Roboter (24) kann nach Beendigung der Bearbeitungsvorgänge das Werkstück (3) weiter transportieren und an die nächste Anlagenstation zur Fortsetzung des Fertigungsprozesses übergeben. Figur 1 zeigt dies ausschnittsweise. Die Roboter (23) können währenddessen bereits die Bearbeitung des nächsten zugeführten Bauteils (3) aufnehmen. In Anpassung an die unterschiedlichen Bauteiltypen kann der Roboter (24) unterschiedliche und austauschbare Roboterwerkzeuge (27) besitzen, die in seinem Werkzeugbereich in ein oder mehreren Werkzeugmagazinen (28) angeordnet sind.

In der Variante von Figur 7 sind ein oder mehrere Bearbeitungsstationen (22,22') in die Ladestation (20) eingebunden oder direkt an der Ladestation (20) angeordnet. In diesem Fall dient die Aufnahmestelle (39) zugleich als Bearbeitungsstelle (43), wobei das Werkstück (3) auf der Ladestation (20), insbesondere dem Drehtisch (11), bearbeitet wird. Auch in dieser Ausführungsform können an den Aufnahmestellen (39) unterschiedliche Werkzeuge (4,5,6,7) für unterschiedliche Werkstücke (3) angeordnet sein, wie dies Figur 7 darstellt. Alternativ können zwei oder mehr Aufnahmestellen gleichartige Werkzeuge (4,5,6,7) aufweisen. Dies kann insbesondere der Fall sein, wenn mehrere Bearbeitungsstationen (22,22') an oder auf der Ladestation (20) angeordnet sind. Die Werkzeuge (4,5,6,7) sind zum Beispiel stationär auf der Ladestation (29), insbesondere dem Drehtisch (11) angeordnet. Sie können bei Bedarf in der vorbeschriebenen Weise ausgetauscht werden. An der Ladestation (20) können auch ein oder mehrere Ladeeinrichtungen (21), sowie Ausschleusungen (29) und Servicestationen (30) angeordnet sein.

In der Variante von Figur 7 wird das Werkstück (3) an der Aufnahmestelle (39) und auf der Ladestation (20) von ein oder mehreren Bearbeitungseinrichtungen (23) bearbeitet. Diese können flurgebunden seitlich neben der Ladestation (20) oder an anderer Stelle, z.B. über der Ladestation (20) angeordnet sein. Außerdem ist mindestens eine Handlingeinrichtung (24) vorhanden, die in der vorbeschriebenen Weise das Werkstück (2) handhaben und nach Durchführung der ersten Bearbeitungs- und insbesondere Fügevorgänge vom Werkzeug (4,5,6,7) lösen kann. Hierzu kann die Handlingeinrichtung (24) z.B. die in Figur 7 angedeutete Greifeinrichtung (40) aufweisen.

Auch bei dieser Ausführungsform ist eine Überlappung der Bearbeitungs- und Beladungszeiten möglich. Sobald die ersten Bearbeitungsvorgänge durchgeführt sind und z.B. das Werkstück (3) ausreichend mechanisch stabilisiert ist, kann es vom Handlingroboter (24) vom Werkzeug (4,5,6,7) gelöst und insbesondere angehoben werden, wobei in dieser Lösestellung die weitere Bearbeitung durch die Bearbeitungsvorrichtungen (23) erfolgt. Während dieser Prozesszeit kann die Ladestation (20), insbesondere der Drehtisch (11), das leere Werkzeug (4,5,6,7) in die Ladeposition an der Ladeeinrichtung (21) für eine Neubestückung zurück bewegen. Anschließend kann das beladene Werkzeug (4,5,6,7) wieder zur Bearbeitungsstation (22,22') gebracht werden, was ebenfalls während der restlichen Bearbeitungszeit erfolgen kann. Wenn die Bearbeitung des ersten Werkstücks (3) beendet ist, können die Bearbeitungsvorrichtungen (23) sofort das neue Werkstück (3) auf dem Werkzeug (4,5,6,7) bearbeiten, wobei die Handlingvorrichtung (24) genügend Zeit für die Abgabe des zuvor bearbeiteten Werkstücks (3) hat. Der Bearbeitungsprozess beginnt dann wieder von neuem.

Wenn mehrere Bearbeitungsstationen (22,22') auf oder an der Ladestation (2) angeordnet sind, empfiehlt sich eine gegenseitige Abstimmung der Bearbeitungszeiten und der Rüstzeiten mit der Neubestückung der Werkzeuge (4,5,6,7). Bei einer Mehrfachanordnung von Bearbeitungsstationen (22,22') können diese gleiche oder unterschiedliche Werkstücke (3) bearbeiten, wobei entsprechend gleiche oder unterschiedliche Werkzeug (4,5,6,7) vorhanden sind.

Bei der Ausführungsform von Figur 7 ist eine Anordnung der Werkzeug (4,5,6,7) über Eck vorteilhaft. Bei dieser Anordnung ist in der Regel mehr Platz für die Bearbeitungs- und Handlingeinrichtungen (23,24) vorhanden als bei der überlappten Anordnung gemäß Figur 2, wobei eine solche Anordnung grundsätzlich ebenfalls möglich ist.

Wie Figur 1 und 8 ferner verdeutlichen, kann im Bereich der Ladeeinrichtung (21) eine Zuführeinrichtung (32) für Bauteile (3) oder deren Bauteilkomponenten angeordnet sein. Hier werden die Bauteile (3) zur Beladung der Werkzeuge (4,5,6,7,8) bereit gestellt. Dies kann z.B. wie in Figur 8 mindestens ein konventioneller Drehtisch sein. Ferner kann an der Ladeeinrichtung (21) eine andere Art von Ausschleusung (29) für Bauteile (3) bzw. Bauteilkomponenten oder für Werkzeuge (4,5,6,7,8) vorhanden sein. In diesem Fall kann die Ladeeinrichtung (21) die Teile mit entsprechenden Greifeinrichtungen fassen und auf die als Förderer ausgebildete Ausschleusung (29) zum Abtransport setzen. Ein Werkzeugwechsel wird entsprechend ausgeführt.

Abwandlungen der gezeigten und beschriebenen Ausführungsformen sind in verschiedener Weise möglich. Insbesondere können die Merkmale der verschiedenen gezeigten Ausführungsbeispiele beliebig untereinander kombiniert und/oder ausgetauscht werden.

An einen Drehtisch (11) können mehr als zwei Bearbeitungsstationen (22,22') ggf. an unterschiedlichen Stellen über entsprechende Werkzeugförderer (16) angeschlossen sein. Umgekehrt kann eine separate Bearbeitungsstation (22) an mehrere Drehtische (11) angeschlossen sein. Die Zahl der auf einem Drehtisch (11) angeordneten Werkzeuge und Führungsabschnitte (15) kann zwischen zwei und beliebig vielen variieren. Veränderbar ist auch deren Ausrichtung, die z.B. radial sein kann.

Der Drehtisch (11) muss außerdem nicht in der gezeigten Ausrichtung mit im wesentlichen vertikaler Drehachse (12) und liegender, horizontaler Tisch- und Werkzeugebene angeordnet sein. Der Drehtisch (11) kann alternativ eine schräge oder horizontale Drehachse (12) mit einer schrägen oder vertikalen Tisch- und Werkzeugebene und mit einer entsprechend ausgebildeten Führung (14) aufweisen. Die Drehachse (12) kann ferner beweglich, z.B. kippbar oder fahrbar angeordnet sein. Auch die Bearbeitungsstation (22,22'), das Werkzeugmagazin (28) und die Servicestation (30) können entsprechend angepasst sein.

In weiterer Variation ist es möglich, die Aufnahmestellen (39) anders auszubilden, z.B. als stationäre oder mit ein oder mehreren Zusatzachsen versehene Halterung(en) für mehrere Werkzeuge (4,5,6,7,8) oder Werkzeugträger (9). Dies können z.B. stationäre oder drehbare Trommel- oder Traggestelle sein, die z.B. eine prismatische Querschnittsform haben.

Variabel sind ferner Ausgestaltung und Anordnung des Werkzeugförderers (16). Auch die Anordnung und Ausgestaltung der Bearbeitungsstation (22,22') ist beliebig veränderbar. Die in den Ausführungsbeispielen gezeigten und beschriebenen Ausführungsformen können hinsichtlich ihrer Merkmale untereinander vertauscht und beliebigt kombiniert werden. An den Drehtischen (11) können insbesondere ein oder mehrere Servicestationen (30) und ein oder mehrere zusätzliche Werkzeugmagazine (31) angeschlossen sein.

### BEZUGSZEICHENLISTE

- 1: Fertigungsanlage
- 2: Fertigungseinrichtung
- 3: Bauteil, Karosseriebauteil, Werkstück
- 4: Werkzeug, Bauteilaufnahme
- 5: Werkzeug, Bauteilaufnahme
- 6: Werkzeug, Bauteilaufnahme
- 7: Werkzeug, Bauteilaufnahme
- 8: Werkzeug, Bauteilaufnahme
- 9: Werkzeugträger, Schlitten
- 10: Spanneinrichtung
- 11: Drehtisch
- 12: Drehtischachse, Drehachse
- 13: Magazin, Werkzeugmagazin
- 14: Führung, Schienenführung
- 15: Führungsabschnitt, Schienenabschnitt
- 16: Werkzeugförderer
- 17: Schleppförderer, Zahnriementrieb
- 18: Mitnehmer
- 19: Aufnehmer
- 20: Ladestation
- 21: Ladeeinrichtung, Roboter
- 22: Bearbeitungsstation, Schweißstation
- 22': Bearbeitungsstation, Schweißstation
- 23: Bearbeitungseinrichtung, Roboter
- 24: Handlingeinrichtung, Roboter
- 25: Stationsgestell
- 26: Führungsabschnitt, Schienenabschnitt
- 27: Roboterwerkzeug
- 28: Werkzeugmagazin
- 29: Ausschleusung
- 30: Servicestation, Wartungsstation
- 31: zusätzliches Magazin, Werkzeugmagazin
- 32: Zuführeinrichtung
- 33: Behandlungseinrichtung
- 34: Störkontur
- 35: Absteckung
- 36: Energiezuführung
- 37: Tischgestell, Traggerüst
- 38: Schutzkabine, Laserkabine
- 39: Aufnahmestelle
- 40: Greifwerkzeug
- 41: Verkettung
- 42: Anlagenteil
- 43: Bearbeitungsstelle
- A-I: Bauteil- und Werkzeugtypen

## Patentansprüche

1. Fertigungseinrichtung für Bauteile (3) von Karosserien, bestehend aus mindestens einer beweglichen Ladestation (20) mit mindestens einem Werkzeug (4,5,6,7,8) zur Aufnahme der Bauteile (3) und mindestens einer Bearbeitungsstation (22,22') mit einer oder mehreren Bearbeitungseinrichtungen (23) zur Bearbeitung der Bauteile (3), wobei die bewegliche Ladestation (20) als Werkzeugmagazin (13) ausgebildet ist und mehrere Aufnahmestellen (39) mit unterschiedlichen Werkzeugen (4,5,6,7) für unterschiedliche Bauteiltypen (A-I) aufweist, **dadurch gekennzeichnet, dass** eine oder mehrere Bearbeitungsstationen (22,22') in die Ladestation (20) eingebunden oder direkt an der Ladestation (20) angeordnet sind, wobei mindestens eine Bearbeitungsstation (22,22') oder eine Bearbeitungsstelle (43) auf der Ladestation (20) angeordnet ist und die Bauteile (3) auf der Ladestation (20) bearbeitbar sind.

2. Fertigungseinrichtung nach Anspruch 1, **dadurch gekennzeichnet, dass** zwei oder mehr Aufnahmestellen (39) gleichartige Werkzeuge (4,5,6,7) aufweisen.

3. Fertigungseinrichtung nach Anspruch 1 oder 2, **dadurch gekennzeichnet, dass** die Werkzeuge (4,5,6,7) stationär und austauschbar auf der Ladestation (20) angeordnet sind.

4. Fertigungseinrichtung nach Anspruch 1, 2 oder 3, **dadurch gekennzeichnet, dass** an der Bearbeitungsstation (22,22') mindestens eine Bearbeitungseinrichtung (23) und mindestens eine Handlingeinrichtung (24) zum Handhaben und Lösen der Bauteile (3) vom Werkzeug (4,5,6,7,8) angeordnet sind.

5. Fertigungseinrichtung nach einem der vorhergehenden Ansprüche, **dadurch gekennzeichnet, dass** eine Bearbeitungseinrichtung (23) flurgebunden neben der Ladestation (20) angeordnet ist.

6. Fertigungseinrichtung nach einem der vorhergehenden Ansprüche, **dadurch gekennzeichnet, dass** eine Bearbeitungseinrichtung (23) über der Ladestation (20) angeordnet ist.

7. Fertigungseinrichtung nach einem der vorhergehenden Ansprüche, **dadurch gekennzeichnet, dass** die Ladestation (20) rotierfähig, insbesondere als Drehtisch (11) oder als Umlaufförderer ausgebildet ist.

8. Fertigungseinrichtung nach einem der vorhergehenden Ansprüche, **dadurch gekennzeichnet, dass** das Werkzeug (4,5,6,7,8) einen Werkzeugträger (9) mit einer Spanneinrichtung (10) für die Bauteile (3) aufweist.

9. Fertigungseinrichtung nach einem der vorhergehenden Ansprüche, **dadurch gekennzeichnet, dass** die Werkzeuge (4,5,6,7,8) einheitliche Werkzeugträger (9) und unterschiedliche, typbezogene Spanneinrichtungen (10) aufweisen.

10. Fertigungseinrichtung nach einem der vorhergehenden Ansprüche, **dadurch gekennzeichnet, dass** an der Ladestation (20) mindestens eine Zuführeinrichtung (32) für Bauteile (3) und mindestens eine Ladeeinrichtung (21) angeordnet sind.

11. Fertigungseinrichtung nach einem der vorhergehenden Ansprüche, **dadurch gekennzeichnet, dass** die Ladeeinrichtung (21) und/oder die Bearbeitungseinrichtung (23) und/oder die Handlingeinrichtung (24) als mehrachsige Industrieroboter mit Roboterwerkzeugen (27) zum Bearbeiten und/oder Handhaben der Bauteile (3) ausgebildet sind.

12. Fertigungseinrichtung nach einem der vorhergehenden Ansprüche, **dadurch gekennzeichnet, dass** an der Ladeeinrichtung (21) eine Ausschleusung (29) für Bauteile (3) oder Bauteilkomponenten oder für wechselbare Werkzeuge (4,5,6,7,8) angeordnet ist.

13. Verfahren zum Fertigen von Bauteilen (3) von Karosserien, wobei die Bauteile (3) auf eine Ladestation (20) mit mindestens einem Werkzeug (4,5,6,7,8) zur Aufnahme der Bauteile (3) geladen und mindestens einer mit der Ladestation (20) verbundenen Bearbeitungsstation (22,22') mit einer oder mehreren Bearbeitungseinrichtungen (23) zur Bearbeitung der Bauteile (3) zugeführt werden, wobei unterschiedliche Bauteile (3) von der mit mehreren unterschiedlichen Werkzeugen (4,5,6,7) für unterschiedliche Bauteiltypen (A-I) ausgerüsteten beweglichen Ladestation (20) der Bearbeitungsstation (22,22') zugeführt werden, **dadurch gekennzeichnet, dass** die Bauteile (3) auf der Ladestation (20) bearbeitet werden und die Bauteile (3) an der Bearbeitungsstation (22,22') während des Bearbeitungsprozesses von mindestens einer Handlingeinrichtung (24) vom Werkzeug (4,5,6,7) gelöst und in der Lösestellung von der oder den Bearbeitungseinrichtung(en) (23) weiter bearbeitet werden, wobei die Ladestation (20) währenddessen das Werkzeug (4,5,6,7) in eine andere Position zur erneuten Beladung mit einem Bauteil (3) bewegt.

14. Verfahren nach Anspruch 13, **dadurch gekennzeichnet, dass** die Bauteile (3) mehrteilig ausgebildet sind und die Einzelteile bei der Bearbeitung gefügt werden.

15. Verfahren nach Anspruch 13 oder 14, **dadurch gekennzeichnet, dass** die Handlingeinrichtung (24) ein Greifwerkzeug (40) trägt, mit dem sie das ausreichend mechanisch stabilisierte Bauteil (3) nach dem ersten Fügevorgang und dem Verbinden der Bauteilkomponenten greift, anhebt und vom Werkzeug (4,5,6,7,8) löst sowie schwebend hält, wobei die eine oder mehreren Bearbeitungseinrichtungen (23) ihre Bearbeitungsvorgänge fortsetzen.

16. Verfahren nach Anspruch 13, 14 oder 15, **dadurch gekennzeichnet, dass** die Handlingeinrichtung (24) nach Beendigung der Bearbeitungsvorgänge das Bauteil (3) weiter transportiert.

17. Verfahren nach einem der Ansprüche 13 bis 16, **dadurch gekennzeichnet, dass** die Bearbeitungs- und Beladungszeiten überlappt werden, wobei das erneut beladene Werkzeug (4,5,6,7) wieder zur Bearbeitungsstation (22,22') gebracht wird und die eine oder mehreren Bearbeitungseinrichtungen (23) die Bearbeitung des zugeführten Bauteils (3) beginnen, während die Handlingeinrichtung (24) das zuvor bearbeitete Bauteil (3) abgibt.

18. Verfahren nach einem der Ansprüche 13 bis 17, **dadurch gekennzeichnet, dass** die Bearbeitungsvorgänge Fügeprozesse der Bauteile (3), insbesondere Schweißprozesse beim Geometrieschweißen von zunächst losen Komponenten der Bauteile (3), beinhalten.

19. Verfahren nach einem der Ansprüche 13 bis 18, **dadurch gekennzeichnet, dass** die Bearbeitungsvorgänge alternativ oder zusätzlich zu den Fügeprozessen, insbesondere Schweißen, Kleben oder Nieten, andere Bearbeitungsprozesse insbesondere Umformprozesse oder Wärmebehandlungen, beinhalten.

## Claims

1. Manufacturing device for components (3) of vehicle bodies, consisting of at least one movable loading station (20) having at least one tool (4, 5, 6, 7, 8) for receiving the components (3) and at least one machining station (22, 22') having one or more machining devices (23) for machining the components (3), wherein the movable loading station (20) is in the form of a tool magazine (13) and has a plurality of reception points (39) having different tools (4, 5, 6, 7) for different component types (A-I), **characterized in that** one or more machining stations (22, 22') are incorporated into the loading station (20) or are arranged directly on the loading station (20), wherein at least one machining station (22, 22') or one machining point (43) is arranged on the loading station (20) and the components (3) are machinable on the loading station (20).

2. Manufacturing device according to Claim 1, **characterized in that** two or more reception points (39) have tools (4, 5, 6, 7) of the same kind.

3. Manufacturing device according to Claim 1 or 2, **characterized in that** the tools (4, 5, 6, 7) are arranged in a stationary and exchangeable manner on the loading station (20).

4. Manufacturing device according to Claim 1, 2 or 3, **characterized in that** at least one machining device (23) and at least one handling device (24) for handling and releasing the components (3) from the tool (4, 5, 6, 7, 8) are arranged at the machining station (22, 22').

5. Manufacturing device according to one of the preceding claims, **characterized in that** one machining device (23) is arranged in a floor-bound manner next to the loading station (20).

6. Manufacturing device according to one of the preceding claims, **characterized in that** one machining device (23) is arranged above the loading station (20).

7. Manufacturing device according to one of the preceding claims, **characterized in that** the loading station (20) is configured in a rotatable manner, in particular as a turntable (11) or as circulating conveyor.

8. Manufacturing device according to one of the preceding claims, **characterized in that** the tool (4, 5, 6, 7, 8) has a tool carrier (9) having a clamping device (10) for the components (3).

9. Manufacturing device according to one of the preceding claims, **characterized in that** the tools (4, 5, 6, 7, 8) have uniform tool carriers (9) and different, type-related clamping devices (10).

10. Manufacturing device according to one of the preceding claims, **characterized in that** at least one supply device (32) for components (3) and at least one loading device (21) are arranged at the loading station (20).

11. Manufacturing device according to one of the preceding claims, **characterized in that** the loading device (21) and/or the machining device (23) and/or the handling device (24) are in the form of multiaxial industrial robots having robot tools (27) for machining and/or handling the components (3).

12. Manufacturing device according to one of the preceding claims, **characterized in that** an exit (29) for components (3) or component parts or for exchangeable tools (4, 5, 6, 7, 8) is arranged at the loading device (21).

13. Method for manufacturing components (3) of vehicle bodies, wherein the components (3) are loaded onto a loading station (20) having at least one tool (4, 5, 6, 7, 8) for receiving the components (3) and are supplied to at least one machining station (22, 22') connected to the loading station (20) and having one or more machining devices (23) for machining the components (3), wherein different components (3) are supplied to the machining station (22, 22') by the movable loading station (20) equipped with a plurality of different tools (4, 5, 6, 7) for different component types (A-I), **characterized in that** the components (3) are machined on the loading station (20) and the components (3) are released from the tool (4, 5, 6, 7) at the machining station (22, 22') during the machining operation by at least one handling device (24) and are further machined in the released position by the machining device(s) (23), wherein the loading station (20) in the meantime moves the tool (4, 5, 6, 7) into a different position for reloading with a component (3).

14. Method according to Claim 13, **characterized in that** the components (3) are formed in a multi-part manner and the individual parts are joined during the machining.

15. Method according to Claim 13 or 14, **characterized in that** the handling device (24) carries a gripping tool (40) by way of which it grips the sufficiently mechanically stabilized component (3) after the first joining operation and the connecting of the component parts, lifts it and releases it from the tool (4, 5, 6, 7, 8) and holds it in a suspended manner, wherein the one or more machining devices (23) continue their machining operations.

16. Method according to Claim 13, 14 or 15, **characterized in that** the handling device (24) transports the component (3) further after the end of the machining operations.

17. Method according to one of Claims 13 to 16, **characterized in that** the machining and loading times overlap, wherein the reloaded tool (4, 5, 6, 7) is moved to the machining station (22, 22') again and the one or more machining devices (23) begin to machine the supplied component (3) while the handling device (24) discharges the previously machined component (3).

18. Method according to one of Claims 13 to 17, **characterized in that** the machining operations include joining processes of the components (3), in particular welding processes during the geometric welding of initially loose parts of the components (3).

19. Method according to one of Claims 13 to 18, **characterized in that** the machining operations, alternatively or in addition to the joining processes, in particular welding, adhesive bonding or riveting, include other machining processes, in particular forming processes or heat treatments.

## Revendications

1. Dispositif de fabrication pour des composants (3) de carrosseries, constitué d'au moins un poste de chargement mobile (20) comprenant au moins un outil (4, 5, 6, 7, 8) pour recevoir les composants (3) et d'au moins un poste de traitement (22, 22') comprenant un ou plusieurs dispositifs de traitement (23) pour usiner les composants (3), le poste de chargement mobile (20) étant réalisé sous forme de magasin d'outil (13) et présentant plusieurs zones de réception (39) comprenant différents outils (4, 5, 6, 7) pour différents types de composants (A-I), **caractérisé en ce qu'**un ou plusieurs postes de traitement (22, 22') sont incorporés dans le poste de chargement (20) ou sont disposés directement sur le poste de chargement (20), au moins un poste de traitement (22, 22') ou une zone de traitement (43) étant disposé(e) sur le poste de chargement (20) et les composants (3) pouvant être usinés sur le poste de chargement (20).

2. Dispositif de fabrication selon la revendication 1, **caractérisé en ce que** deux ou plus de deux zones de réception (39) présentent des outils de même type (4, 5, 6, 7).

3. Dispositif de fabrication selon la revendication 1 ou 2, **caractérisé en ce que** les outils (4, 5, 6, 7) sont disposés de manière stationnaire et remplaçable sur le poste de chargement (20).

4. Dispositif de fabrication selon la revendication 1, 2 ou 3, **caractérisé en ce qu'**au moins un dispositif de traitement (23) et au moins un dispositif de manipulation (24) pour la manipulation et le desserrage des composants (3) de l'outil (4, 5, 6, 7, 8) sont disposés sur le poste de traitement (22, 22').

5. Dispositif de fabrication selon l'une quelconque des revendications précédentes, **caractérisé en ce qu'**un dispositif de traitement (23) est disposé de manière montée sur le sol à côté du poste de chargement (20).

6. Dispositif de fabrication selon l'une quelconque des revendications précédentes, **caractérisé en ce qu'**un dispositif de traitement (23) est disposé au-dessus du poste de chargement (20).

7. Dispositif de fabrication selon l'une quelconque des revendications précédentes, **caractérisé en ce que** le poste de chargement (20) est rotatif, notamment est réalisé sous forme de table tournante (11) ou de transporteur en boucle fermée.

8. Dispositif de fabrication selon l'une quelconque des revendications précédentes, **caractérisé en ce que** l'outil (4, 5, 6, 7, 8) présente un porte-outil (9) avec un dispositif de serrage (10) pour les composants (3).

9. Dispositif de fabrication selon l'une quelconque des revendications précédentes, **caractérisé en ce que** les outils (4, 5, 6, 7, 8) présentent des porte-outils (9) unitaires et des dispositifs de serrage (10) différents dépendant du type.

10. Dispositif de fabrication selon l'une quelconque des revendications précédentes, **caractérisé en ce qu'**au moins un dispositif d'alimentation (32) pour les composants (3) et au moins un dispositif de chargement (21) sont disposés au niveau du poste de chargement (20).

11. Dispositif de fabrication selon l'une quelconque des revendications précédentes, **caractérisé en ce que** le dispositif de chargement (21) et/ou le dispositif de traitement (23) et/ou le dispositif de manipulation (24) sont réalisés sous forme de robots industriels à plusieurs axes avec des outils de robot (27) pour usiner et/ou manipuler les composants (3).

12. Dispositif de fabrication selon l'une quelconque des revendications précédentes, **caractérisé en ce qu'**un système d'éjection (29) pour les composants (3) ou des pièces de composants ou pour des outils remplaçables (4, 5, 6, 7, 8) est disposé au niveau du dispositif de chargement (21).

13. Procédé de fabrication de composants (3) de carrosseries, les composants (3) étant chargés sur un poste de chargement (20) comprenant au moins un outil (4, 5, 6, 7, 8) pour recevoir les composants (3) et étant acheminés à au moins un poste de traitement (22, 22') relié au poste de chargement (20) et comprenant un ou plusieurs dispositifs de traitement (23) pour usiner les composants (3), différents composants (3) étant acheminés au poste de traitement (22, 22') depuis le poste de chargement (20) mobile équipé de plusieurs outils différents (4, 5, 6, 7) pour différents types de composants (A-I), **caractérisé en ce que** les composants (3) sont usinés sur le poste de chargement (20) et les composants (3) sont desserrés de l'outil (4, 5, 6, 7) sur le poste de traitement (22, 22') pendant le processus de traitement par au moins un dispositif de manipulation (24) et dans la position de desserrage sont usinés davantage par le ou les dispositifs de traitement (23), le poste de chargement (20) déplaçant pendant ce temps l'outil (4, 5, 6, 7) dans une autre position en vue d'un nouveau chargement avec un composant (3).

14. Procédé selon la revendication 13, **caractérisé en ce que** les composants (3) sont réalisés en plusieurs parties et les pièces détachées sont assemblées lors du traitement.

15. Procédé selon la revendication 13 ou 14, **caractérisé en ce que** le dispositif de manipulation (24) porte un outil de préhension (40), avec lequel il saisit le composant (3) stabilisé mécaniquement de manière suffisante après la première opération d'assemblage et la connexion des pièces de composants, le soulève et le desserre de l'outil (4, 5, 6, 7, 8) en le maintenant en suspension, le ou les dispositifs de traitement (23) poursuivant leurs opérations de traitement.

16. Procédé selon la revendication 13, 14 ou 15, **caractérisé en ce que** le dispositif de manipulation (24) transporte davantage le composant (3) après la fin des opérations de traitement.

17. Procédé selon l'une quelconque des revendications 13 à 16, **caractérisé en ce que** les temps de traitement et de chargement se chevauchent, l'outil nouvellement chargé (4, 5, 6, 7) étant à nouveau amené au poste de traitement (22, 22') et le ou les dispositifs de traitement (23) commençant le traitement du composant acheminé (3) pendant que le dispositif de manipulation (24) délivre le composant (3) usiné préalablement.

18. Procédé selon l'une quelconque des revendications 13 à 17, **caractérisé en ce que** les opérations de traitement incluent des processus d'assemblage des composants (3), notamment des processus de soudage lors du soudage géométrique de pièces initialement lâches des composants (3).

19. Procédé selon l'une quelconque des revendications 13 à 18, **caractérisé en ce que** les opérations de traitement incluent, en variante ou en plus des processus d'assemblage, notamment du soudage, du collage ou du rivetage, d'autres processus de traitement, notamment des processus de mise en forme ou de traitements thermiques.
